# EUROPEAN PATENT SPECIFICATION

(11) **EP 3 288 169 B1**
(45) Date of publication and mention of the grant of the patent: **04.11.2020**
(21) Application number: 16782891.2
(22) Date of filing: 11.03.2016
(51) Int. Cl.: H02M 7/49, H02M 7/12, H02M 7/48, H02M 7/483

(54) **POWER CONVERSION DEVICE**
STROMWANDLUNGSVORRICHTUNG
DISPOSITIF DE CONVERSION DE COURANT

(30) Priority: 24.04.2015 JP 2015089770
(43) Date of publication of application: 28.02.2018
(73) Proprietor: Kabushiki Kaisha Toshiba, Minato-ku, Tokyo 105-8001 (JP); Toshiba Energy Systems & Solutions Corporation, Saiwai-ku Kawasaki-shi Kanagawa 2120013 (JP)
(72) Inventor: ARAI, Takuro, Tokyo 105-8001 (JP); SUZUKI, Daichi, Tokyo 105-8001 (JP)
(74) Representative: AWA Sweden AB
(86) International application number: PCT/JP2016/057711
(87) International publication number: WO 2016/170869

(56) References cited:
- EP-A1- 2 784 925
- WO-A1-2014/084010
- JP-A- 2007 280 358
- JP-A- 2013 055 886
- JP-A- 2013 226 029
- JP-A- 2014 108 000

## Description

### FIELD

Embodiments of the present disclosure relate to a power conversion device that converts power mutually between DC and AC.

### BACKGROUND

Research and development for a power conversion device having unit converters which include a DC voltage source such as a capacitor and which are connected in multi stages like modular multilevel converters (hereinafter, referred to as MMCs), and capable of converting a high voltage equivalent to power system and power distribution system voltages are advancing. The MMC can simplify a transformer having large weight and volume, and relatively large costs in the entire system. In addition, the unit converter includes a switching element and a DC capacitor, achieves multi-level output voltage and voltage waveform by shifting the timings of turning ON and OFF the switching element, and obtains an output approximated to a sinusoidal wave, thereby achieving an advantage such that a harmonic filter can be eliminated.

According to such circuit scheme having unit converters connected in multi stages, in order to control the voltage value of the DC capacitor in each unit converter uniform, it is fundamentally necessary to cause a flow-back current that flows back a DC power supply to flow constantly. When three phases are connected to the same DC power supply and when there is a slight difference in the DC voltage synthesis value in each phase, an excessive short-circuit current flows between the phases, possibly breaking down a device. According to conventional technologies, in order to protect the device, a buffer reactor is inserted in each phase to prevent a short-circuit current from becoming excessive. However, such buffer reactor results in an increase in the size of the device and an increase in costs.

Accordingly, a scheme of providing a three-winding transformer in each phase is proposed. According to this scheme, the three-winding transformer includes a primary winding, and a secondary winding and a tertiary winding insulated from the primary winding, the primary winding is connected to an AC system, and the secondary winding and the tertiary winding are connected to a positive-side phase arm and a negative-side phase arm, respectively. According to this scheme, since the leakage impedance of the three-winding transformer suppresses a short-circuit current, a buffer reactor becomes unnecessary and a power conversion device which is low cost and compact can be obtained.

### CITATION LIST

### PATENT LITERATURES

Patent Document 1: JP 2013-115837 A
Patent Document 2: JP 2014-108000 A

### SUMMARY

Since the MMC using the foregoing three-winding transformer converts power between AC and DC by the capacitor in the unit converter, it is necessary to charge the capacitor from the power system in the initial activation. In the initial charging, an inrush overcurrent of the charging current may flow in the capacitor. Hence, it is necessary to provide a charging unit that includes a charging resistor for suppressing this inrush overcurrent of the charging current.

According to conventional technologies, this charging unit is placed in the primary side of the three-winding transformer or a quaternary side (stabilizing winding) of a quaternary transformer when there is a stabilizing winding. In these cases, since an excitation current of the transformer flows through the charging resistor of the charging unit in addition to the charging current during the charging of the capacitor and after the completion of charging, a heat of the charging unit caused by such currents is a technical problem in some cases. In order to withstand such heat generation, when the amount of generated heat is consistent, the larger an object is, the more the object is unlikely to be heated, and the size of the charging unit is increased.

A power conversion device according to an embodiment of the present disclosure is made in order to address the above technical problems, and an objective is to provide a power conversion device capable of downsizing a charging unit.

In order to accomplish the above objective, a power conversion device mutually converting power between DC and three-phase. AC is provided, according to the appended set of claims.

### BRIEF DESCRIPTION OF DRAWINGS

FIG. 1 is a diagram illustrating a structure of a power conversion device according to a first embodiment;
FIG. 2 is a diagram illustrating a structure of a chopper cell;
FIG. 3 is a diagram for explaining the initial charging of the power conversion device according to the first embodiment;
FIG. 4 is a diagram for explaining the initial charging of the power conversion device according to the first embodiment;
FIG. 5 is a diagram illustrating a structure of a power conversion device according to a second embodiment;
FIG. 6 is a diagram illustrating a structure of a power conversion device according to a third embodiment;
FIG. 7 is a diagram illustrating a structure of a power conversion device according to a fourth embodiment;
FIG. 8 is a diagram illustrating a structure of a power conversion device according to a fifth embodiment;
FIG. 9 is a diagram illustrating a structure of a full bridge cell;
FIG. 10 is a diagram illustrating a structure of a power conversion device according to a sixth embodiment; and
FIG. 11 is a diagram illustrating a structure of a power conversion device according to a seventh embodiment.

### DETAILED DESCRIPTION

### [1. First Embodiment]

### [1-1. Entire Structure]

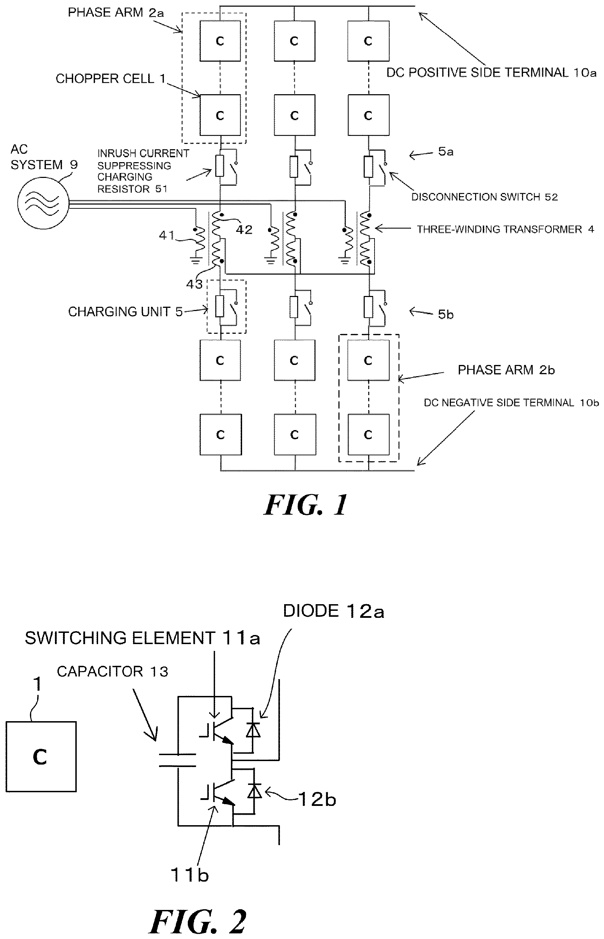

In the following, a power conversion device according to this embodiment will be described with reference to FIG. 1 and FIG. 2. FIG. 1 is a diagram illustrating a structure of the power conversion device according to this embodiment.

The power conversion device converts power mutually between AC and DC, and transmits power that is converted from AC to DC or from DC to AC. The power conversion device includes a DC positive side terminal 10a and a DC negative side terminal 10b. Those terminals 10a and 10b are connected to other power conversion devices or DC lines, and the power conversion device is applied for a frequency conversion of changing the frequency from, for example, 50 Hz to 60 Hz, and a DC power transmission system.

In this specification, in order to describe each circuit component, the DC positive side terminal 10a will be referred to as the "positive side", while the DC negative side terminal 10b will be referred to as the "negative side".

As illustrated in FIG. 1, the power conversion device includes, in each phase of the three phases, a phase arm 2 having a plurality of chopper cells 1 connected, a three-winding transformer 4, and a plurality of charging units 5, and outputs a voltage from the DC positive side terminal 10a and the DC negative side terminal 10b with the chopper cell 1 being as a unit voltage supply. Provided between the DC positive side terminal 10a and the DC negative side terminal 10b are a positive phase arm 2a, a charging unit 5a, the three-winding transformer 4, a charging unit 5b, and a negative side phase arm 2b connected in series in this sequence from the positive side to the negative side.

The power conversion device has the positive side phase arm 2a and the negative side phase arm 2b in each phase connected to an AC system 9 via the three-winding transformer 4, and in the initial charging, a capacitor 13 in the chopper cell 1 is charged by power supplied from the AC system 9. At this time, the charging units 5 are placed between the three-winding transformer 4 and the phase arms 2a and 2b in order to prevent an inrush current from flowing in the capacitor 13.

### [1-2. Detailed Structure]

FIG. 2 illustrates a structure of the chopper cell 1. The chopper cell 1 includes two switching elements 11a and 11b, diodes 12a and 12b, and the capacitor 13, and outputs a desired DC voltage by the switching of the switching elements 11a and 11b with the capacitor 13 serves as a voltage source.

More specifically, the switching elements 11a and 11b are connected in series to form a leg, and the capacitor 13 is connected in parallel with this leg. Example switching elements 11a and 11b applicable are self-arc-extinguishing type elements, such as a GTO, an IGBT, and an IEGT. The feedback diodes 12a and 12b are connected in reverse parallel with the respective switching elements 11a and 11b. The chopper cell 1 outputs a DC voltage Vc of the capacitor 13 when the switching element 11a is in the ON state, and the output voltage becomes zero when the switching element 11b in in the ON state.

The phase arm 2 is configured by N number (N ≥ 2) of chopper cells 1 connected in series, and outputs arbitrary voltage such as an AC voltage in multi-stage with the chopper cell 1 as a unit converter. The AC voltage in multi-stage is output by shifting the timing of the switching operation of the switching elements 11a and 11b in each chopper cell 1.

This phase arm 2 is provided in each phase of three phases, and each phase arm 2 includes the positive side phase arm 2a connected to the DC positive side terminal 10a, and the negative side phase arm 2b connected to the DC negative side terminal 10b. The phase arms 2a and 2b are connected in series via the three-winding transformer 4.

The three-winding transformer 4 is provided in each phase of three phases, and connects the positive side phase arm 2a and the negative side phase arm 2b in each phase to the AC system 9. More specifically, the three-winding transformer 4 includes a primary winding 41, a secondary winding 42, a tertiary winding 43, and a core.

Each of the windings 41 to 43 are wound around the same core. The winding direction of the windings 41 to 43 is indicated by a black dot in FIG. 1, and the side to which the black dot is given will be referred to as a "positive side" and the side to which no black dot is given will be referred to as a "negative side."

The primary winding 41 has a first end connected to the AC system 9, and has a second end grounded. As for the connection between the primary winding 41 and the AC system 9, any connection schemes, such as star connection, delta connection, or neutral grounding resistor, can be selected as appropriate in accordance with a regulation of the power system. An unillustrated circuit breaker is provided between the primary winding 41 and the AC system 9, and the connection or the disconnection between the AC system 9 and the power conversion device is changed in accordance with the circuit closing or opening by the circuit breaker.

The secondary winding 42 and the tertiary winding 43 are insulated from the primary winding 41 connected to the AC system. The number of turns of the secondary winding 42 and the tertiary winding 43 are equal to each other. The negative side of the secondary winding 42 and that of the tertiary winding 43 are connected with each other being in opposite polarities. Hence, since DC magnetic fluxes in opposite directions to each other are generated in the core, DC electromotive forces are mutually canceled with each other in the same phase. Still further, the negative side of the secondary winding 42 and that of the tertiary winding 43 are connected with each other also among three phases. The positive side of the secondary winding 42 is connected to the positive side phase arm 2a, and the positive side of the tertiary winding 43 is connected to the positive side of the negative side phase arm 2b.

The charging unit 5 is applied when charging the capacitor 13 of the chopper cell 1, and suppresses the inrush current to the capacitor 13. The charging unit 5 is connected between the phase arm 2 and the three-winding transformer 4. That is, in each phase, the positive side charging unit 5a is connected to the positive side phase arm 2a and the positive side of the secondary winding 42 of the three-winding transformer 4, and the negative side charging unit 5b is connected to the negative side phase arm 2b and the positive side of the tertiary winding 43 of the three-winding transformer 4. The structure of each charging unit 5a and 5b is consistent, and the description will be collectively given to the charging unit 5.

The charging unit 5 includes a charging resistor 51, and a disconnection switch 52 connected in parallel with this charging resistor 51. The charging resistor 51 is a resistor that suppresses the inrush overcurrent of the charging current when the capacitor 13 of the chopper cell 1 is initially charged from the AC system 9. The disconnection switch 52 is a device for bypassing the charging resistor 51 after the completion of the charging of the capacitor 13.

### [1-3. Action]

A charging method for the capacitor of the power conversion device according to this embodiment will be described. In addition, in order to simplify the description, at the time of activation of the power conversion device, it is assumed that all capacitors 13 of the chopper cells 1 are discharged, and have a voltage that is zero.

First, the power conversion device is connected to the AC system 9 by closing the circuit throw the circuit breaker provided between the AC system 9 and the primary winding 41 of the three-winding transformer 4 with the disconnection switches 52 of each of the charging units 5a and 5b being in open-circuit condition.

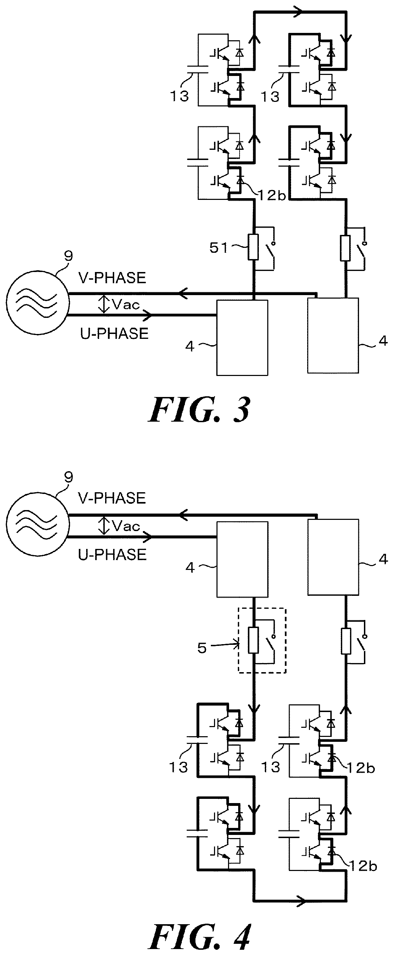

The capacitor 13 is charged by the charging current flowing from the AC system 9, through the primary winding 41 of each three-winding transformer 4, the secondary winding 42, the tertiary winding 43, the charging resistor 51, and to the capacitor 13 of the phase arm 2,. FIG. 3 and FIG. 4 indicate the charging path of the capacitor 13. In FIG. 3 and FIG. 4, for the purpose of description, the number of the chopper cells 1 of each phase arm 2 is exemplified as two, and the illustration for the W phase is omitted.

When, for example, the voltage between U and V lines is positive, that is, when the U-phase voltage is Vac > 0 which is higher than the V-phase voltage, as illustrated in FIG. 3, in the positive path, the capacitor 13 in the V-phase is charged by the power supplied from the AC system 9. As illustrated in FIG. 4, in the negative path, the capacitor 13 of the negative side phase arm 2b in the U-phase is charged. Still further, when the voltage between U and V lines is negative, that is, when the U-phase voltage is Vac < 0 which is lower than the V-phase voltage, an inverse relationship is satisfied. That is, the capacitor 13 in the U-phase is charged in the positive side, and the capacitor 13 in the V-phase is charged in the negative side.

In order to supply AC power, in the AC system 9, the capacitor 13 of the positive side phase arm 2a and the capacitor 13 of the negative side phase arm 2b are charged alternately among respective phases. Hence, all capacitors 13 are charged. Each of the capacitor 13 is charged by a time constant T = C × R (seconds) defined by the resistance R of the charging resistor 51, and the equivalent capacity C of the power conversion device.

In this embodiment, the excitation current for excitation of the core of the three-winding transformer 4 flows only between the AC system 9 and the primary winding 41 of the three-winding transformer 4, and does not flow through the charging resistor 51. That is, according to conventional technologies, the charging resistor is provided between the AC system and the primary winding of the three-winding transformer, and the excitation current flows through the charging resistor in addition to the charging current, and therefore the charging resistor 51 generates heat, and the size of the charging unit is increased. In contrast, according to this embodiment, since the charging unit 5 is provided not at the primary-winding side of the three-winding transformer 4 but at the secondary-winding-42 side of the three-winding transformer 4 and the tertiary-winding-43 side thereof, the charging resistor 51 does not generate heat by the excitation current. Hence, the charging unit 5 can be downsized. In addition, since there is no energy loss by the excitation current flowing through the charging resistor 51, the efficiency for initial charging is improved.

When charging of all capacitors 13 is completed, the initial charging of the power conversion device is completed. After that, the disconnection switch 52 of each phase closes the circuit to bypass the charging resistor 51, and the power conversion device is shifted to the normal operation state.

### [1-4. Effect]

The power conversion device of this embodiment is a power conversion device which converts power mutually between a DC and a three-phase AC, and includes, in each phase, the positive side phase arm 2a connected to the DC positive side terminal 10a, and including the chopper cells 1 including the switching elements 11a and 11b and the capacitor 13 and connected in multi-stage, the negative side phase arm 2b connected to the DC negative side terminal 10b, and including the chopper cells including the switching elements 11a and 11b and the capacitor 13 and connected in multi-stage, the three-winding transformer 4 connected between the positive side phase arm 2a and the negative side phase arm 2b, and the plurality of the charging units 5 including the charging resistor 51 and the disconnection switch 52 connected in parallel with each other. The three-winding transformer 4 includes the secondary winding 42 connected to the positive side phase arm 2a, and the tertiary winding 43 connected to the negative side phase arm 2b, and the negative side of the secondary winding 42 and that of the tertiary winding 43 are connected with each other in each phase and among three phases . The charging unit 5 is connected between the positive side phase arm 2a and the secondary winding 42, and between the negative side phase arm 2b and the tertiary winding 43.

Accordingly, since no excitation current flows through the charging resistor 51 during the charging and after the completion of charging, the power conversion device that has the downsized charging unit 5 can be obtained.

### [2. Second Embodiment]

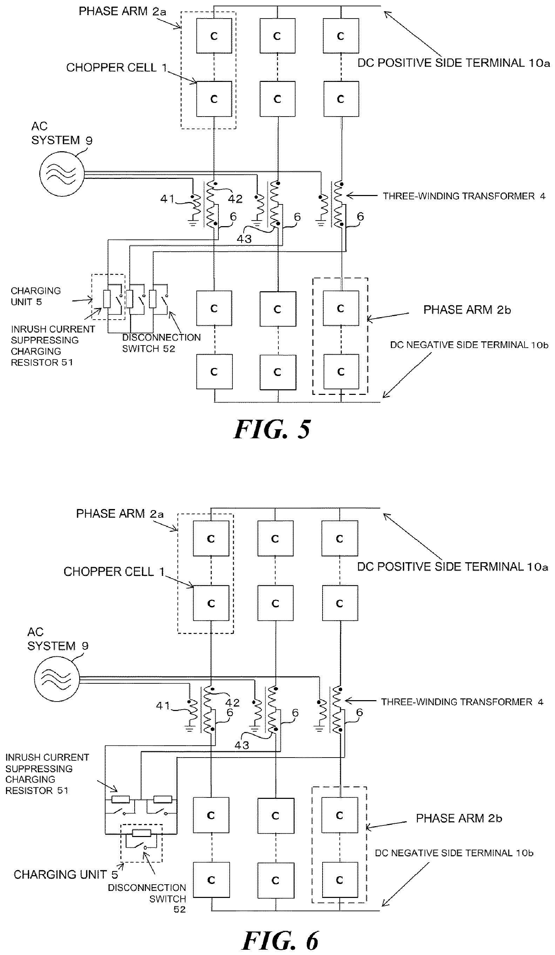

A second embodiment will be described with reference to FIG. 5. The second embodiment employs the same basic structure as that of the first embodiment. Hence, only differences from the first embodiment will be described, the same reference numeral will be given to the same component as that of the first embodiment, and the detailed description will not be repeated.

FIG. 5 is a diagram illustrating a structure of the power conversion device according to the second embodiment. Although the charging unit 5 is common with the first embodiment in which the unit is provided at the secondary-winding-42 side of the three-winding transformer 4 and the tertiary-winding-43 side in each phase, the following point differs.

That is, as illustrated in FIG. 5, a neutral line 6 that connects the negative side of the secondary winding 42 and that of the tertiary winding 43 with each other is provided in the three-winding transformer 4 in each phase. The charging unit 5 in each phase is connected by star connection, and is connected to the neutral line 6 in each phase. That is, a first end of each of the charging unit 5 is connected to the neutral line 6, and a second end of each of the charging unit 5 is connected by star connection.

In this embodiment, like the first embodiment, since the charging unit 5 is provided at the secondary-winding-42 side of the three-winding transformer 4 and the tertiary-winding-43 side thereof, no excitation current that excites the core of the three-winding transformer 4 flows through the charging unit 5. Hence, the charging unit 5 can be downsized.

Still further, according to this embodiment, since the charging unit 5 is connected to the neutral line 6, in comparison with the first embodiment in which the two charging units 5 are provided in each phase, only the single charging unit 5 is sufficient in each phase. That is, the first embodiment needs six charging units 5, but this embodiment needs only three charging units 5. Still further, as for the potential of the charging unit 5, since the voltage relative to the ground is 1/2 of the voltage between the DC positive side terminal 10a and the DC negative side terminal 10b, an insulation design is facilitated.

Moreover, since the charging unit 5 in each phase is connected by star connection, the first ends of the charging units 5 are connected at a single location, and the number of connections is reduced, simplifying a circuit structure.

### [3. Third Embodiment]

A third embodiment will be described with reference to FIG. 6. The third embodiment employs the same basic structure as that of the second embodiment. Hence, only differences from the second embodiment will be described, the same reference numeral will be given to the same component as that of the second embodiment, and the detailed description will not be repeated.

FIG. 6 is a diagram illustrating a structure of the power conversion device according to the third embodiment. In the third embodiment, each of the charging unit 5 is connected by delta connection. The neutral line 6 drawn from the secondary winding 42 of the three-winding transformer 4 and the tertiary winding 43 thereof in each phase is connected between the charging units 5.

Since the charging unit 5 is connected by delta connection, in comparison with the star connection, the voltage to be applied to each of the charging unit 5 differs even if the same power is supplied from the AC system 9. That is, according to the star connection, the voltage applied to the charging unit 5 (charging resistor 51) is a phase voltage a, and according to the delta connection, an inter-line voltage b is applied. Hence, the voltage applied to the charging resistor 51 in the case of delta connection is higher based on the relation of the phase voltage a and the inter-line voltage b that is b = (√3) × a. Consequently, the current flowing through the charging unit 5 in the case of delta connection is smaller, and the resistance of the charging resistor 51 of the charging unit 5 increases accordingly.

Thus, by adopting the delta connection, the phase voltage applied to the charging unit 5 and the phase current flowing through the charging resistor 51 change, and the resistance value of the charging resistor 51 can be changed accordingly. The rated capacity and rated current required for the power conversion device are large as several hundred kV and several thousand A, and when these values are changed by designing, the resistance value required for the charging resistor 51 also changes, and there may be no resistor having the resistance value that matches with the designing when the designing is made based on the star connection. In such case, the degree of freedom for selecting the charging resistor 51 can be increased by adopting the delta connection to the charging unit 5, and the power conversion device that matches the request can be obtained.

In contrast, when the connection scheme is changed from the delta connection to the star connection, since the resistance value of the charging resistor 51 decreases when the designing is made based on the star connection in comparison with the case when the designing is made based on the delta connection, the degree of freedom for selecting the charging resistor 51 improves by changing the connection scheme of the charging unit 5 when the charging resistor 51 to be prepared is limited, facilitating a circuit designing.

### [4. Fourth Embodiment]

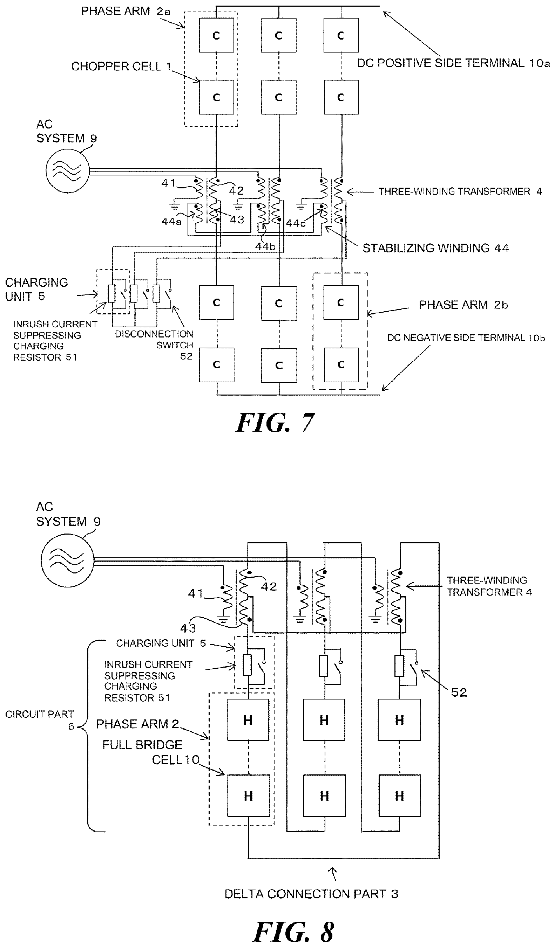

A fourth embodiment will be described with reference to FIG. 7. The fourth embodiment employs the same basic structure as that of the second embodiment. Hence, only differences from the second embodiment will be described, the same reference numeral will be given to the same component as that of the second embodiment, and the detailed description will not be repeated.

FIG. 7 is a diagram illustrating a structure of the power conversion device according to the fourth embodiment. As illustrated in FIG. 7, according to the fourth embodiment, the three-winding transformer 4 in each phase includes a stabilizing winding 44. The stabilizing windings 44 of the each of the three-winding transformers 4 are connected in series with each other by the delta connection. More specifically, when the stabilizing windings 44 of the three-winding transformers 4 are distinguished with reference numerals 44a, 44b, and 44c, the positive side that is a first end of the stabilizing winding 44a is connected to the negative side of the other stabilizing winding 44c, and the negative side that is a second end of the stabilizing winding 44a is connected to the positive side of the remaining stabilizing winding 44b. In addition, the negative side of the stabilizing winding 44b is connected to the positive side of the stabilizing winding 44c.

When an error occurs in the sinusoidal wave generated by the power conversion device of this embodiment, and for example, harmonic waves like tertiary harmonic waves are generated, and an adverse effect may be given when the harmonic waves flows in the AC system 9. In order to avoid this, according to this embodiment, each three-winding transformer 4 is further provided with the stabilizing winding 44, each of the stabilizing windings 44 are connected in series to form the delta connection. This causes the generated harmonic waves to be circulated within the delta connection forming the closed loop by the stabilizing windings 44, preventing the harmonic waves from flowing in the AC system 9.

### [5. Fifth Embodiment]

A fifth embodiment will be described with reference to FIG. 8. The fifth embodiment employs the same basic structure as that of the first embodiment. Hence, only differences from the first embodiment will be described, the same reference numeral will be given to the same component as that of the first embodiment, and the detailed description will not be repeated.

FIG. 8 is a diagram illustrating a structure of the power conversion device according to the fifth embodiment. The power conversion device according to this embodiment is a power conversion device that applies or absorbs reactive power relative to a three-phase AC system. This is a power conversion device that applies or absorb a reactive current via an insulated transformer relative to the three-phase AC system 9 of 50 or 60 Hz. When the voltage of the AC system 9 is low, reactive power is applied to the AC system 9, and when the voltage of the AC system 9 is high, the reactive power is absorbed from the AC system 9, so that the voltage of the AC system 9 is adjusted by utilizing the impedance of the AC system 9.

This reactive power conversion device includes a delta connection part 3. The charging unit 5 and the phase arm 2 which is connected in series to the charging unit 5 and which outputs the phase voltage in a multi-stage waveform are provided in each phase of the delta connection part 3. The charging unit 5 and the phase arm 2 connected in series with each other in each phase form a circuit part 6, and the circuit unit 6 is formed by the delta connection.

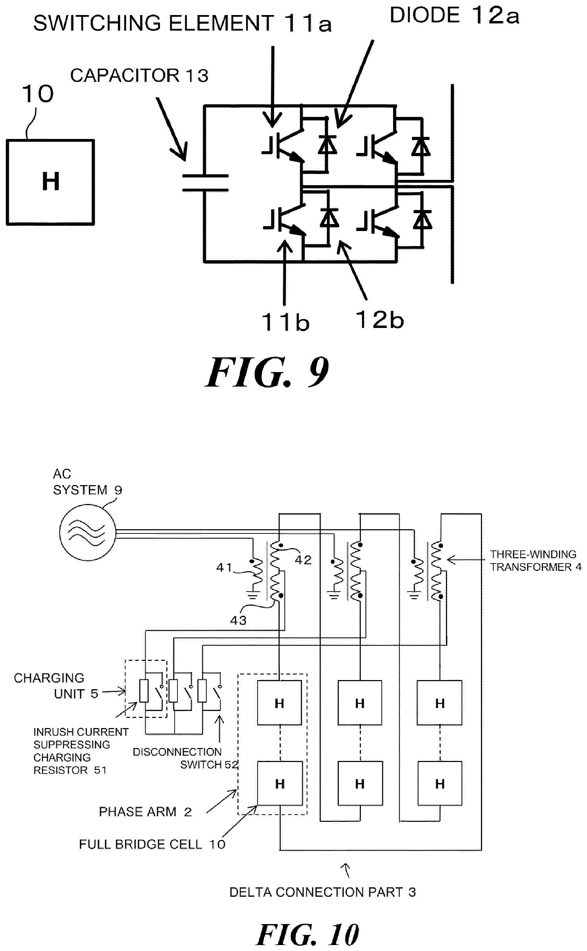

A plurality of full bridge cells 10 are connected in series to form the phase arm 2. FIG. 9 is a diagram illustrating a structure of the full bridge cell 10. The full bridge cell 10 includes two legs each including the switching elements 11a and 11b connected in series, and the capacitor connected in parallel therewith. The diodes 12a and 12b are connected in reverse parallel with the switching elements 11a and 11b, respectively. The terminal of the full bridge cell 10 is drawn from between the switching elements 11a and 11b which is an intermediate position of each leg.

The three-winding transformer 4 is provided in each phase of this delta connection part 3. The negative side of the secondary winding 42 of the three-winding transformer 4 and that of the tertiary winding 43 thereof in each phase are connected with each other so as to achieve opposite polarities, and the secondary winding 42 and the tertiary winding 43 are inserted between the phase arms 2.

More specifically, as for the three-winding transformer 4 in each phase, the positive side of the secondary winding 42 is connected to the phase arm 2 in the other phase, and the tertiary winding 43 is connected to the charging unit 5 to form a delta connection forming the delta connection part 3 together with the charging unit 5 and the phase arm 2. The negative side of the secondary winding 42 and that of the tertiary winding 43 are also connected with each other among three phases.

In other words, the phase arm 2 and the charging unit 5 are connected in series to form the circuit part 6 in each phase, a first end thereof is connected to the positive side of the secondary winding 42, and a second end thereof is connected to the positive side of the tertiary winding 43 in the other phase, thereby forming the delta connection part 3. Although the circuit unit 6 employs the structure as described above in this embodiment, the series connection relation between the charging unit 5 and the phase arm 2 forming the circuit part may be inverted. That is, a first end of the phase arm 2 may be connected to the positive side of the tertiary winding 43, and the charging unit 5 connected in series to a second end of the phase arm 2 may be connected to the positive side of the secondary winding 42 in the other phase.

Therefore, according to this embodiment, in order to form the delta connection part 3 of the reactive power conversion device, the circuit part 6 in each phase which has the phase arm 2 and the charging unit 5 connected in series has the first end connected to the positive side of the secondary winding 42, and has the second end connected to the positive side of the tertiary winding 43 in the other phase to form the delta connection part 3, and the charging unit 5 is connected to the secondary winding 42 or the tertiary winding 43 which are insulated from the primary winding 41 connected to the AC system 9.

Hence, no excitation current for exciting the core of each of the three-winding transformer 4 flows through the charging resistor 51 of the charging unit 5, and unnecessary heat generation and energy loss are can be avoided, enabling a downsizing of the charging unit 5. Accordingly, the power conversion device downsized as a whole is can be obtained.

### [6. Sixth Embodiment]

A sixth embodiment will be described with reference to FIG. 10. The sixth embodiment employs the same basic structure as that of the fifth embodiment. Hence, only differences from the fifth embodiment will be described, the same reference numeral will be given to the same component as that of the fifth embodiment, and the detailed description will not be repeated.

FIG. 10 is a diagram illustrating a structure of the power conversion device according to the sixth embodiment. In the sixth embodiment, the charging unit 5 is not provided at the delta connection part 3, but is connected to the neutral line which connects the negative side of the secondary winding 42 of each of the three-winding transformer 4 and that of the tertiary winding 43 thereof. The charging unit 5 is connected by star connection.

Accordingly, since the charging unit 5 in each phase is connected by the star connection, in comparison with the fifth embodiment, the first ends of the charging units 5 are connected at a single location, and the number of connections is reduced, simplifying a circuit structure.

### [7. Seventh Embodiment]

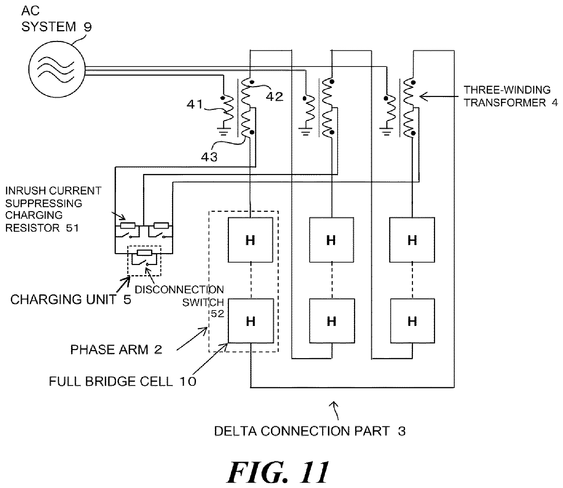

A Seventh embodiment will be described with reference to FIG. 11. The seventh embodiment employs the same basic structure as that of the sixth embodiment. Hence, only differences from the sixth embodiment will be described, the same reference numeral will be given to the same component as that of the sixth embodiment, and the detailed description will not be repeated.

FIG. 11 is a diagram illustrating a structure of the power conversion device according to the seventh embodiment. In the seventh embodiment, each of the charging units 5 are connected not by star connection but by delta connection. Hence, even if the power is consistent, a different voltage from that of the star connection can be applied to the charging unit 5, the resistance value of the charging resistor 51 of the charging unit 5 can be changed. That is, the degree of freedom for selecting of the charging resistor 51 is improved.

### [8. Other Embodiments]

In this specification, although several embodiments of the present disclosure have been described, these embodiments are merely presented as examples and are not intended to limit the scope of the present disclosure. The above embodiments can be carried out in other various forms, and various omissions, replacements, and modifications can be made thereto without departing from the scope of the present disclosure. Such embodiments and the modified forms thereof are within the scope of the present disclosure, and also within the scope of the invention as recited in the appended claims and further within the equivalent range thereto.

For example, according to the first embodiment, although the unit converter is the chopper cell 1, the unit converter may be the full bridge cell 10. By applying the full bridge cell 10 as the unit converter, a fault current like a DC grounding fault can be interrupted.

The stabilizing winding 44 in the fourth embodiment is also applicable to the three-winding transformers 4 in the fifth to seventh embodiments.

### [Explanation of a signal]

### REFERENCE SIGNS LIST

- 1: Chopper cell
- 10: Full bridge cell
- 10a: DC positive side terminal
- 10b: DC negative side terminal
- 11a, 11b: Switching element
- 12a, 12b: Diode
- 13: Capacitor
- 2: Phase arm
- 2a: Positive side phase arm
- 2b: Negative side phase arm
- 4: Three-winding transformer
- 41: Primary winding
- 42: Secondary winding
- 43: Tertiary winding
- 44: Stabilizing winding
- 5: Charging unit
- 51: Charging resistor
- 52: Disconnection switch
- 6: Neutral line

## Claims

1. A power conversion device comprising, in each of three phases:
a phase arm (2) comprising unit converters connected in multi stage, the unit converter comprising a switching element and a capacitor;
a three-winding transformer (4) comprising a primary winding (41), a secondary winding (42) and a tertiary winding (43); and
a charging unit (5) comprising a charging resistor (51) and a disconnection switch (52) connected in parallel with each other,
wherein:
the power conversion device applies or absorbs reactive power relative to a three-phase AC system;
a negative side of the secondary winding (42) and a negative side of the tertiary winding (43) are connected with each other in each phase and among the three phases;
**characterized in that**
a circuit part in each phase comprising the phase arm (2) and the charging unit (5) connected in series to each other has a first end connected to a positive side of the tertiary winding (43) and a second end connected to a positive side of the secondary winding (42) in the other phase so as to form a delta connection.

2. A power conversion device according to claim 1, wherein:
the power conversion device mutually converts power between DC and three-phase AC,
the phase arm (2) comprises:
a positive side phase arm (2a) comprising unit converters connected to a DC positive side terminal (10a) and connected in multi stage, each unit converter comprising a switching element (11a) and a capacitor (13);
a negative side phase arm (2b) comprising unit converters connected to a DC negative side terminal (10b) and connected in multi stage, each unit converter comprising a switching element (11b) and a capacitor (13);
the three-winding transformer (4) connected between the positive side phase arm (2a) and the negative side phase arm (2b), and
the charging unit (5) comprises a plurality of charging units (5),
wherein:
the three-winding transformer (4) comprises a secondary winding (42) connected to the positive side phase arm (2a) and a tertiary winding (43) connected to the negative side phase arm (2b), a negative side of the secondary winding (42) and a negative side of the tertiary winding (43) being connected with each other in each phase and among three phases; and
the charging units (5) are connected between the positive side phase arm (2a) and the secondary winding (42), and between the negative side phase arm (2b) and the tertiary winding (43), respectively.

3. A power conversion device according to claim 2, wherein:
the three-winding transformer (4) comprises a secondary winding (42) connected to the positive side phase arm (2a) and a tertiary winding (43) connected to the negative side phase arm (2b);
the three-winding transformer (4) in each phase is provided with a neutral line (6) connecting a negative side of the secondary winding (42) and a negative side of the tertiary winding (43) with each other; and
the charging unit (5) is connected to the neutral line (6) in each phase.

4. The power conversion device according to claim 3, wherein the charging unit (5) in each phase is connected by star connection.

5. The power conversion device according to claim 4, wherein the charging unit (5) in each phase is connected by delta connection.

6. The power conversion device according to any one of claims 2 to 5, wherein the unit converter (5) is a full bridge cell.

7. A power conversion device according to claim 1, wherein:
a negative side of the secondary winding (42) and a negative side of the tertiary winding (43) are connected with each other in each phase and among the three phases;
a first end of the phase arm (2) in each phase is connected to a positive side of the secondary winding (42) of the three-winding transformer (4),
a second end of the phase arm (2) is connected to a positive side of the tertiary winding (43) of the three-winding transformer (4) to form a delta connection; and
the charging unit (5) in each phase is connected by the delta connection, and is connected to a neutral line (6) in each phase connecting the negative side of the secondary winding (42) and the negative side of the tertiary winding (43) with each other.

8. A power conversion device according to claim 1, wherein:
a negative side of the secondary winding (42) and a negative side of the tertiary winding (43) are connected with each other in each phase and among the three phases;
a first end of the phase arm (2) in each phase is connected to a positive side of the secondary winding (42) of the three-winding transformer (4), and a second end of the phase arm (2) is connected to a positive side of the tertiary winding (43) of the three-winding transformer (4) to form a delta connection; and
the charging unit (5) is connected by the delta connection, and is connected to a neutral line (6) in each phase connecting the negative side of the secondary winding (42) and the negative side of the tertiary winding (43) with each other.

9. The power conversion device according to any one of claims 1 to 8, wherein:
the three-winding transformer (4) further comprises a stabilizing winding (44); and
the stabilizing winding (44) in each phase is connected by delta connection.

## Patentansprüche

1. Stromwandlungsvorrichtung, in jeder von drei Phasen Folgendes umfassend:
einen Phasenzweig (2), welcher Einheitswandler umfasst, welche mehrstufig verbunden sind, wobei der Einheitswandler ein Schaltelement und einen Kondensator umfasst;
einen Transformator mit drei Wicklungen (4), welcher eine Primärwicklung (41), eine Sekundärwicklung (42) und eine Tertiärwicklung (43) umfasst; und
eine Ladeeinheit (5), welche einen Ladewiderstand (51) und einen Trennschalter (52) umfasst, welche parallel miteinander verbunden sind,
wobei:
die Stromwandlungsvorrichtung einen Blindstrom in Bezug auf ein dreiphasiges Wechselstromsystem anlegt oder absorbiert;
eine negative Seite der Sekundärwicklung (42) und eine negative Seite der Tertiärwicklung (43) in jeder Phase und unter den drei Phasen miteinander verbunden sind;
**dadurch gekennzeichnet, dass**
ein Schaltungsteil in jeder Phase, welches den Phasenzweig (2) und die Ladeeinheit (5) umfasst, welche zueinander in Reihe geschaltet sind, ein erstes Ende, welches mit einer positiven Seite der Tertiärwicklung (43) verbunden ist, und ein zweites Ende aufweist, welches mit einer positiven Seite der Sekundärwicklung (42) in der anderen Phase verbunden ist, um so eine Delta-Verbindung auszubilden.

2. Stromwandlungsvorrichtung nach Anspruch 1, wobei:
die Stromwandlungsvorrichtung Strom zwischen Gleichstrom und dreiphasigem Wechselstrom gemeinsam wandelt,
der Phasenzweig (2) Folgendes umfasst:
einen positivseitigen Phasenzweig (2a), welcher Einheitswandler umfasst, welche mit einem positivseitigen Gleichstromanschluss (10a) verbunden sind, und jeder mehrstufig verbundene Einheitswandler ein Schaltelement (11a) und einen Kondensator (13) umfasst;
einen negativseitigen Phasenzweig (2b), welcher Einheitswandler umfasst, welche mit einem negativseitigen Gleichstromanschluss (10b) verbunden sind, und jeder mehrstufig verbundene Einheitswandler ein Schaltelement (11b) und einen Kondensator (13) umfasst;
den Transformator mit drei Wicklungen (4), welcher zwischen dem positivseitigen Phasenzweig (2a) und dem negativseitigen Phasenzweig (2b) verbunden ist, und
die Ladeeinheit (5) eine Vielzahl Ladeeinheiten (5) umfasst,
wobei:
der Transformator mit drei Wicklungen (4) eine Sekundärwicklung (42), welche mit dem positivseitigen Phasenzweig (2a) verbunden ist, und eine Tertiärwicklung (43) umfasst, welche mit dem negativseitigen Phasenzweig (2b) verbunden ist, wobei eine negative Seite der Sekundärwicklung (42) und eine negative Seite der Tertiärwicklung (43) in jeder Phase und unter drei Phasen miteinander verbunden sind; und
die Ladeeinheiten (5) zwischen dem positivseitigen Phasenzweig (2a) und der Sekundärwicklung (42) bzw. zwischen dem negativseitigen Phasenzweig (2b) und der Tertiärwicklung (43) verbunden sind.

3. Stromwandlungsvorrichtung nach Anspruch 2, wobei:
der Transformator mit drei Wicklungen (4) eine Sekundärwicklung (42), welche mit dem positivseitigen Phasenzweig (2a) verbunden ist, und eine Tertiärwicklung (43) umfasst, welche mit dem negativseitigen Phasenzweig (2b) verbunden ist;
der Transformator mit drei Wicklungen (4) in jeder Phase mit einer neutralen Leitung (6) versehen ist, welche eine negative Seite der Sekundärwicklung (42) und eine negative Seite der Tertiärwicklung (43) miteinander verbindet; und
die Ladeeinheit (5) in jeder Phase mit der neutralen Leitung (6) verbunden ist.

4. Stromwandlungsvorrichtung nach Anspruch 3, wobei die Ladeeinheit (5) in jeder Phase durch eine Sternverbindung verbunden ist.

5. Stromwandlungsvorrichtung nach Anspruch 4, wobei die Ladeeinheit (5) in jeder Phase durch eine Delta-Verbindung verbunden ist.

6. Stromwandlungsvorrichtung nach einem der Ansprüche 2 bis 5, wobei der Einheitswandler (5) eine Vollbrückenzelle ist.

7. Stromwandlungsvorrichtung nach Anspruch 1, wobei:
eine negative Seite der Sekundärwicklung (42) und eine negative Seite der Tertiärwicklung (43) in jeder Phase und unter den drei Phasen miteinander verbunden sind;
ein erstes Ende des Phasenzweigs (2) in jeder Phase mit einer positiven Seite der Sekundärwicklung (42) des Transformators mit drei Wicklungen (4) verbunden ist,
ein zweites Ende des Phasenzweigs (2) mit einer positiven Seite der Tertiärwicklung (43) des Transformators mit drei Wicklungen (4) verbunden ist, um eine Delta-Verbindung auszubilden; und
die Ladeeinheit (5) in jeder Phase durch die Delta-Verbindung verbunden ist und mit einer neutralen Leitung (6) in jeder Phase verbunden ist, welche die negative Seite der Sekundärwicklung (42) und die negative Seite der Tertiärwicklung (43) miteinander verbindet.

8. Stromwandlungsvorrichtung nach Anspruch 1, wobei:
eine negative Seite der Sekundärwicklung (42) und eine negative Seite der Tertiärwicklung (43) in jeder Phase und unter den drei Phasen miteinander verbunden sind;
ein erstes Ende des Phasenzweigs (2) in jeder Phase mit einer positiven Seite der Sekundärwicklung (42) des Transformators mit drei Wicklungen (4) verbunden ist und ein zweites Ende des Phasenzweigs (2) mit einer positiven Seite der Tertiärwicklung (43) des Transformators mit drei Wicklungen (4) verbunden ist, um eine Delta-Verbindung auszubilden; und
die Ladeeinheit (5) durch die Delta-Verbindung verbunden ist und mit einer neutralen Leitung (6) in jeder Phase verbunden ist, welche die negative Seite der Sekundärwicklung (42) und die negative Seite der Tertiärwicklung (43) miteinander verbindet.

9. Stromwandlungsvorrichtung nach einem der Ansprüche 1 bis 8, wobei:
der Transformator mit drei Wicklungen (4) weiterhin eine Stabilisierungswicklung (44) umfasst; und
die Stabilisierungswicklung (44) in jeder Phase durch eine Delta-Verbindung verbunden ist.

## Revendications

1. Dispositif de conversion de puissance comprenant, dans chacune des trois phases:
un bras de phase (2) comprenant des convertisseurs unitaires connectés en plusieurs étages, le convertisseur unitaire comprenant un élément de commutation et un condensateur;
un transformateur à trois enroulements (4) comprenant un enroulement primaire (41), un enroulement secondaire (42) et un enroulement tertiaire (43); et
une unité de charge (5) comprenant une résistance de charge (51) et un interrupteur de déconnexion (52) connectés en parallèle l'un avec l'autre,
dans lequel:
le dispositif de conversion de puissance applique ou absorbe la puissance réactive par rapport à un système CA triphasé;
un côté négatif de l'enroulement secondaire (42) et un côté négatif de l'enroulement tertiaire (43) sont connectés l'un à l'autre dans chaque phase et parmi les trois phases;
**caractérisé en ce que**
une partie de circuit dans chaque phase comprenant le bras de phase (2) et l'unité de charge (5) connectés en série l'un à l'autre a une première extrémité connectée à un côté positif de l'enroulement tertiaire (43) et une deuxième extrémité connectée à un côté positif de l'enroulement secondaire (42) dans l'autre phase de manière à former une connexion en triangle.

2. Dispositif de conversion de puissance selon la revendication 1, dans lequel:
le dispositif de conversion de puissance convertit mutuellement la puissance entre CC et CA triphasé,
le bras de phase (2) comprend:
un bras de phase côté positif (2a) comprenant des convertisseurs unitaires connectés à une borne côté positif CC (10a) et connectés en plusieurs étages, chaque convertisseur unitaire comprenant une élément de commutation (11a) et un condensateur (13);
un bras de phase côté négatif (2b) comprenant des convertisseurs unitaires connectés à une borne côté négatif CC (10b) et connectés en plusieurs étages, chaque convertisseur unitaire comprenant un élément de commutation (11b) et un condensateur (13);
le transformateur à trois enroulements (4) connecté entre le bras de phase côté positif (2a) et le bras de phase côté négatif (2b), et
l'unité de charge (5) comprend une pluralité d'unités de charge (5),
dans lequel:
le transformateur à trois enroulements (4) comprend un enroulement secondaire (42) connecté au bras de phase côté positif (2a) et un enroulement tertiaire (43) connecté au bras de phase côté négatif (2b), un côté négatif de l'enroulement secondaire (42) et un côté négatif de l'enroulement tertiaire (43) étant connectés l'un à l'autre dans chaque phase et entre trois phases; et
les unités de charge (5) sont connectées entre le bras de phase côté positif (2a) et l'enroulement secondaire (42), et entre le bras de phase côté négatif (2b) et l'enroulement tertiaire (43), respectivement.

3. Dispositif de conversion de puissance selon la revendication 2, dans lequel:
le transformateur à trois enroulements (4) comprend un enroulement secondaire (42) connecté au bras de phase côté positif (2a) et un enroulement tertiaire (43) connecté au bras de phase côté négatif (2b);
le transformateur à trois enroulements (4) dans chaque phase est pourvu d'une ligne neutre (6) reliant un côté négatif de l'enroulement secondaire (42) et un côté négatif de l'enroulement tertiaire (43) l'un avec l'autre; et
l'unité de charge (5) est connectée à la ligne neutre (6) dans chaque phase.

4. Dispositif de conversion de puissance selon la revendication 3, dans lequel l'unité de charge (5) dans chaque phase est connectée par une connexion en étoile.

5. Dispositif de conversion de puissance selon la revendication 4, dans lequel l'unité de charge (5) dans chaque phase est connectée par une connexion en triangle.

6. Dispositif de conversion de puissance selon une quelconque des revendications 2 à 5, dans lequel le convertisseur d'unité (5) est une cellule de pont complet.

7. Dispositif de conversion de puissance selon la revendication 1, dans lequel:
un côté négatif de l'enroulement secondaire (42) et un côté négatif de l'enroulement tertiaire (43) sont connectés l'un à l'autre dans chaque phase et parmi les trois phases;
une première extrémité du bras de phase (2) dans chaque phase est connectée à un côté positif de l'enroulement secondaire (42) du transformateur à trois enroulements (4),
une deuxième extrémité du bras de phase (2) est reliée à un côté positif de l'enroulement tertiaire (43) du transformateur à trois enroulements (4) pour former une connexion en triangle; et
l'unité de charge (5) dans chaque phase est connectée par la connexion en triangle, et est connectée à une ligne neutre (6) dans chaque phase reliant le côté négatif de l'enroulement secondaire (42) et le côté négatif de l'enroulement tertiaire (43) entre eux.

8. Dispositif de conversion de puissance selon la revendication 1, dans lequel:
un côté négatif de l'enroulement secondaire (42) et un côté négatif de l'enroulement tertiaire (43) sont connectés l'un à l'autre dans chaque phase et parmi les trois phases;
une première extrémité du bras de phase (2) dans chaque phase est connectée à un côté positif de l'enroulement secondaire (42) du transformateur à trois enroulements (4), et une seconde extrémité du bras de phase (2) est connectée à un côté positif de l'enroulement tertiaire (43) du transformateur à trois enroulements (4) pour former une connexion en triangle; et
l'unité de charge (5) est connectée par la connexion en triangle, et est connectée à une ligne neutre (6) dans chaque phase reliant le côté négatif de l'enroulement secondaire (42) et le côté négatif de l'enroulement tertiaire (43) l'un avec l'autre.

9. Dispositif de conversion de puissance selon une quelconque des revendications 1 à 8, dans lequel:
le transformateur à trois enroulements (4) comprend en outre un enroulement de stabilisation (44); et
l'enroulement de stabilisation (44) dans chaque phase est connecté par connexion en triangle.
